# EUROPEAN PATENT APPLICATION

(11) **EP 3 903 573 A1**
(43) Date of publication of application: **03.11.2021**
(21) Application number: 21167008.8
(22) Date of filing: 06.04.2021
(51) Int. Cl.: A01G 31/06

(54) **BENCH FOR CARRYING TRAYS ON WHICH CROPS TO BE GROWN ARE LOCATED**

(30) Priority: 03.04.2020 NL 2025277
(71) Applicant: Artechno Holding BV, 2678 NE De Lier (NL)
(72) Inventor: VAN LEEUWEN, Sjors Bastiaan, 2461 GC Ter Haar (NL); VAN ZANTEN, Dirk Maarten, 2691 JX Ter Haar (NL)
(74) Representative: Verhees, Godefridus Josephus Maria

(57) **Abstract**

Bench 1 for carrying trays 3 on which crops to be grown are located and for directing water flowing in the bench 1 to the crops present in the trays 3 and for excess water to a drainage opening 7. At the bottom 5 of the bin 9 a water-conducting reinforcing rib 21 extending in the longitudinal direction of the bin 9 is provided. This reinforcing rib 21 has an undulating course. The reinforcing rib 21 extends in or near the center between the two long, upright side walls 11, 13 from a first short side wall 15 to an opposite second short side wall 17. The reinforcing rib 21 is interrupted near this second short side wall 17, so that water can flow through the interruption 23 from one side of the reinforcing rib 21 to the other side of the reinforcing rib 21.

## Description

### DESCRIPTION:

### Technical field of the invention

The invention relates to a bench for carrying trays on which crops to be grown are located and for directing water flowing in the bench to the crops present in the trays and for excess water to a drain, which bench comprises a bin provided with an elongated, rectangular, flat bottom with at the periphery two opposite and longitudinally extending long, upright side walls and two widthwise extending, short, upright side walls, which bottom is provided near one of the short, upright side walls with a discharge opening for the excess water. Such a bench is used in a climate cell, among other things. The space in a climate cell must be used as effectively as possible. This is why it is important that the hydroponics system functions compactly and requires little maintenance. In addition, it is important that the widest possible variety of crops can be grown in or on the bench.

### Background of the invention

Such a bench is generally known. The well-known bench has the following drawbacks:
- the bottom of the bench warps when it cools down after injection molding, causing it to sag and causing a difference in the water level in the bench,
- the water that is fed to the trays is not covered and is therefore exposed to the light from LED lamps present for cultivation, which causes algae growth in the bench,
- the bottom of the bin of the bench has reinforcement ribs at the bottom, which makes the bench less practical for transport by different machines, and
- the area of the bench where crops are actually grown is only three quarters of the total area occupied by the bench.

### Summary of the invention

An object of the invention is to provide a bench of the type described in the preamble in which the above-described problems do not arise. More specifically, the object of the invention is to provide a bench which does not bend during operation and through which the water flows optimally. The bench according to the invention is characterized for this purpose, in that that a water-guiding reinforcing rib extending longitudinally of the bin is present on the bottom of the bin, which reinforcing rib is present on the same side of the bottom as the upright side walls and is located in or near the center between the two long, upright side walls and extends from a first of the short side walls to an opposite second of the short side walls, the stiffening rib being interrupted near this second short side wall so that water can flow through the interruption from one side of the reinforcing rib to the other side of the reinforcing rib.

To provide even more rigidity, the reinforcement rib preferably has a zig-zag or undulating course.

In order to be able to set the water level in the bench when using the bench in a cultivation system, that the bench has a number of tubes of different length which can be attached to the bottom of the bin at the location of the discharge opening in the bottom of the bin. The top of the tubes forms an overflow for water so that the water level in the bench can be adjusted by choosing the tube of the appropriate length.

An embodiment of the crate according to the invention is characterized in that the side walls of the bin are provided with bearing surfaces for supporting trays on the edges and that supports are provided on the reinforcing rib for supporting the trays in or near the center of longitudinally extending edges of the tray. This allows the bench to support the trays on it during use without compromising the surface that can be used for cultivation.

The invention also relates to a combination of a benche and a number of elongated, rectangular trays present thereon which extend in the longitudinal direction transversely of the longitudinal direction of the bench. With regard to this combination, the invention is characterized in that the trays extend above the entire surface of the bottom, so that the water flowing into the bench is completely covered by the trays. The trays rest with the edges on the bearing surfaces of the side walls of the bench and on the supports present on the reinforcing rib, so that almost the entire surface of the bench can be used for cultivation.

The invention further relates to a combination of a number of benches and a rack provided with a number of roller tracks present one above the other, on which the benches are present and over which the benches can be moved. With regard to this combination, the invention is characterized in that that the rack is provided with LED lamps located above the roller tracks, as well as with at least one fan that creates an air flow under the benches and along the LED lamps. The underside of the benches conducts the air flow to the LED lamps so that they can be properly cooled.

Preferably, the benches extend in the longitudinal direction transversely to the direction of transport of the roller tracks and only on the first short side wall of the benches present on one roller track and over the entire length of the roller track, under the drainage openings present in the bottom of the benches, a water discharge gutter extends which is connected to the rack.

### Brief description of the drawings

The invention will be explained in more detail below with reference to an exemplary embodiment of the combination of the bench with trays according to the invention shown in the drawings. Hereby:
Figure 1 shows the combination of the bench with four trays in perspective;
Figure 2 shows the combination shown in figure 1 in top view;
Figure 3 shows the bench of the combination shown in figure 1 seen from above;
Figure 4 shows the bench of the combination shown in figure 1 seen from below; and
Figure 5 shows the combination shown in figure 1 in a rack of a cultivation device.

### Detailed description of the drawings

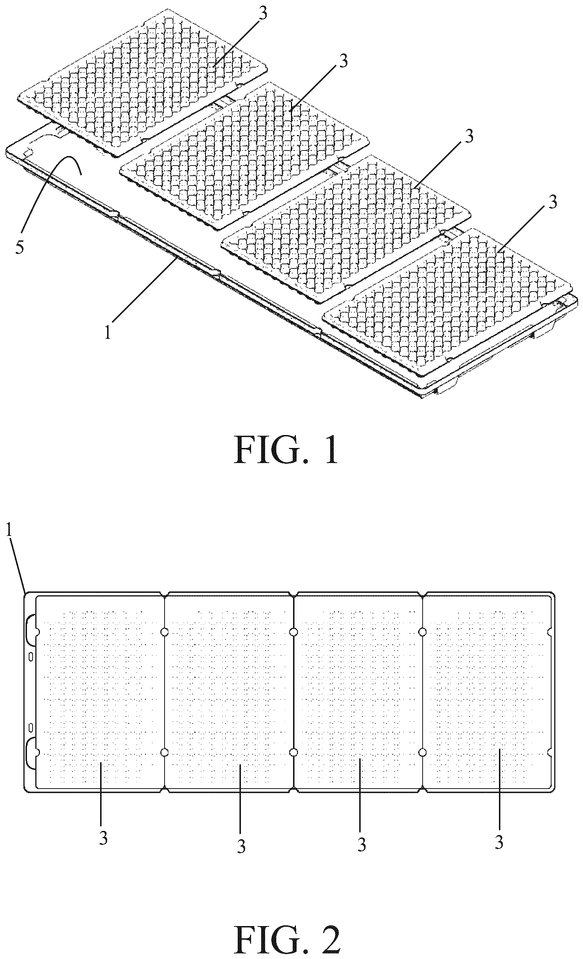

Figures 1 and 2 show a combination of the bench 1 with four trays 3 according to the invention in perspective and in top view. The rectangular trays 3, on which crops to be grown are located, extend in the longitudinal direction transversely of the longitudinal direction of the bench 1. The trays 3 are present above the entire surface of the bottom 5 of the bench, so that water running in the bench is completely covered by the trays 3.

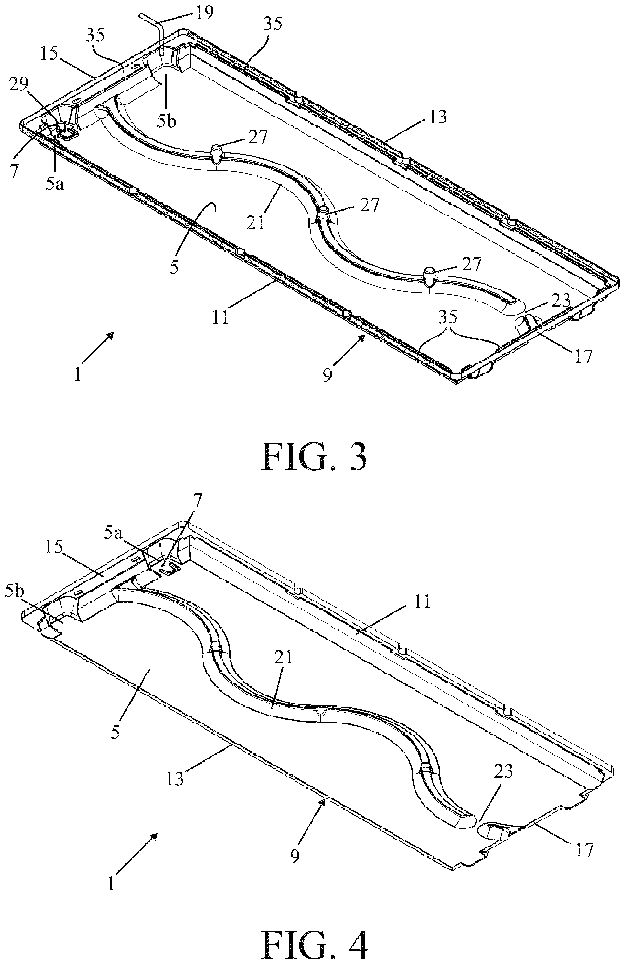

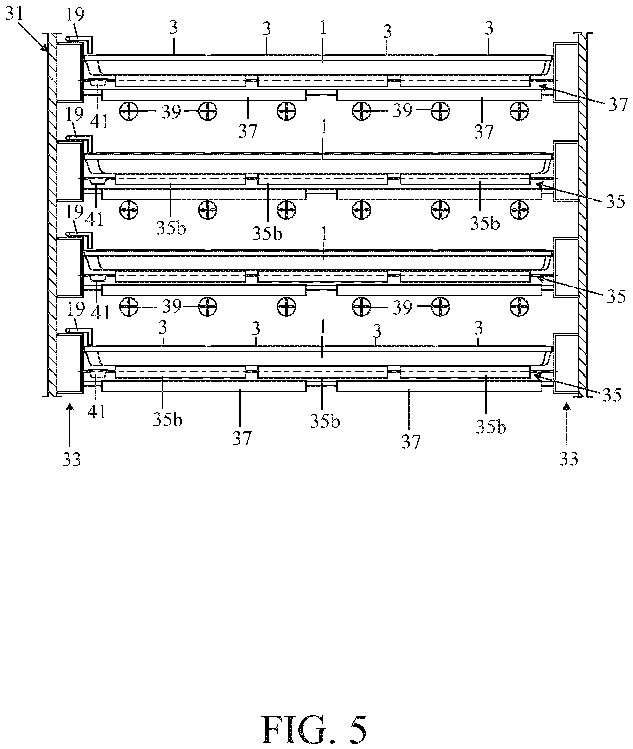

In Figures 3 and 4, the bench of the combination is shown separately, viewed from above and below, respectively. The bench 1 carries the trays 3 and directs running water in the bench to the crops present in the trays and directs excess water to a drainage opening 7 present in the bench. The bench has a bin 9 provided with an elongated, rectangular, flat bottom 5 having at the periphery two long, upright sidewalls 11 and 13 extending opposite each other and extending in longitudinal direction and two short upright side walls 15 and 17 extending in width direction. Near one of the short upright side walls 15 the bottom 5 is provided with. two protruding parts 5a and 5b projecting beyond the tray 3 above these parts. In one of these protruding parts 5a the discharge opening 7 for the excess water is present and via the other protruding part 5b water is led into the bin 9 via a pipe system 19 (see figure 5).

A reinforcing rib 21 is present on the bottom 5 of the bin, which rib extends in the longitudinal direction of the bin 9 from one of the short side walls 15 in a direction towards the other short side wall 17. In order to provide additional reinforcement to the bottom 5, the reinforcement rib 21 has an undulating course. The reinforcing rib 21 is located near the center between the two long side walls 11 and 13 and is interrupted at a position 23 near the other short side wall 17. The reinforcing rib 21 not only serves to reinforce the bottom 5 of the bench, but also functions as a water guide. The water entering the bin 9 at the projecting part 5b of the bottom flows from this first short side wall 15 to the opposite second short side wall 17 and flows through the interruption 23 in the reinforcing rib to the other side of the reinforcing g rib 21 and from there back to the first short side wall 15.

The side walls 11-17 of the tray are provided with bearing surfaces 25 on which the trays 3 rest with the edges. Supports 27 are provided on the reinforcing rib 21 for supporting the trays 3. Each support 27 carries two trays 3 by supporting extending edges of the trays 3 near the center of the tray.

By choosing a tube 29 of a certain length from a number of tubes of different length and arranging this tube 29 on the bottom at the location of the discharge opening 7 in the bottom 5 of the bin 9, see figure 3, the water level in the bin can be adjusted.

Figure 5 shows a number of combinations of benches 1 and trays 3 during use in a rack 33 of a cultivation device 31. Roller tracks 35 are present one below the other in the rack. Benches 1 are present on the roller tracks 35 and these benches can be moved over the rollers 35b. The benches 1 extend in the longitudinal direction transversely of the conveying direction of the roller tracks 35. The rack 33 is provided with LED lamps 37 which are present above the roller tracks 35, as well as with fans 39 which generate an air flow under the benches 1 and along the LED lamps 37. On the first short side wall 15 of the benches 1 present on the roller tracks 35, water drainage gutters 41 are present under the benches at the location of the drainage openings in the bottoms of the benches. These water drainage gutters 41 are connected to the rack 33.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Bench (1) for carrying trays (3) on which crops to be grown are located and for directing water flowing in the bench (1) to the crops present in the trays (3) and for excess water to a drain, which bench (1) comprises a bin (9) provided with an elongated, rectangular, flat bottom (5) with at the periphery two opposite and longitudinally extending long, upright side walls (11, 13) and two widthwise extending, short, upright side walls (15, 17), which bottom (5) is provided near one of the short, upright side walls (15) with a discharge opening (7) for the excess water, **characterized in that** a water-guiding reinforcing rib (21) extending longitudinally of the bin (9) is present on the bottom (5) of the bin (9), which reinforcing rib (21) is present on the same side of the bottom (5) as the upright side walls (11-17) and is located in or near the center between the two long, upright side walls (11, 13) and extends from a first of the short side walls (15) to an opposite second of the short side walls (17), the stiffening rib (21) being interrupted near this second short side wall (17) so that water can flow through the interruption (23) from one side of the reinforcing rib (21) to the other side of the reinforcing rib (21).

2. Bench (1) according to claim 1, **characterized in that** the reinforcing rib (21) has a zig-zag or undulating course.

3. Bench (1) according to claim 1 or 2, **characterized in that** the bench (1) has a number of tubes (29) of different length which can be attached to the bottom (5) of the bin (9) at the location of the discharge opening (7) in the bottom (5) of the bin (9).

4. Bench (1) according to claim 1, 2 or 3, **characterized in that** the side walls (11-17) of the bin (9) are provided with bearing surfaces (25) for supporting trays (3) on the edges and that supports (27) are provided on the reinforcing rib (21) for supporting the trays (3) in or near the center of longitudinally extending edges of the tray (3).

5. Combination of a bench (1) according to claim 4 and a number of elongated, rectangular trays (3) present thereon which trays (3) in longitudinal direction extend transversely to the longitudinal direction of the bench (1), **characterized in that** the trays (3) extend above the entire surface of the bottom (5), so that the water flowing into the bench (1) is completely covered by the trays (3).

6. Combination of a number of benches (1) according to claim 4 and a rack (33) provided with a number of roller tracks (35) present one above the other, on which the benches (1) are present and over which the benches (1) can be moved, **characterized in that** the rack (33) is provided with LED lamps (37) located above the roller tracks (35), as well as with at least one fan (39) that creates an air flow under the benches (1) and along the LED lamps (37).

7. Combination of a number of benches (1) according to Claim 6, **characterized in that** the benches (1) extend in the longitudinal direction transversely to the direction of transport of the roller tracks (35) and only on the first short side wall (15) of the benches (1) present on one roller track (35) and over the entire length of the roller track (35), under the drainage openings (7) present in the bottom (5) of the benches (1), a water discharge gutter (41) extends which is connected to the rack (33).
